# EUROPEAN PATENT APPLICATION

(11) **EP 1 826 237 A1**
(43) Date of publication of application: **29.08.2007**
(21) Application number: 05814599.6
(22) Date of filing: 09.12.2005
(51) Int. Cl.: C08L 23/00, D01F 6/46

(54) **DYEABLE POLYPROPYLENE RESIN COMPOSITION AND FIBER/NONWOVEN FABRIC COMPRISING THE SAME**

(30) Priority: 13.12.2004 JP 2004359472
(71) Applicant: Prime Polymer Co., Ltd., Tokyo 105-7117 (JP)
(72) Inventor: TAJIMA, Takeharu, Chiba, 2990293 (JP)
(74) Representative: Gille Hrabal Struck Neidlein Prop Roos
(86) International application number: PCT/JP2005/022658
(87) International publication number: WO 2006/064732

(57) **Abstract**

A novel propylene resin composition which can readily impart polypropylene fibers with excellent dyeability and can provide dyed fibers improved in washing resistance and weatherability is provided. A polypropylene resin composition obtained by melt blending the following components (A) to (C):
(A) 85 to 95 mass% of a polypropylene-based resin;
(B) 3 to 9 mass% of ethylene vinyl acetate (EVA); and
(C) 2 to 6 mass% of a polyether ester amide-based compound;

wherein the vinyl acetate content of the ethylene vinyl acetate as the component (B) is 20 mass% or more and 40 mass% or less, and the melt flow rate of the ethylene vinyl acetate is 10 g/10 min or more and 40 g/10 min or less.

## Description

### TECHNICAL FIELD

The invention relates to a fiber material having excellent dyeability formed of a novel polypropylene-based composition.

### BACKGROUND ART

Polypropylene is used widely for preparing fibers due to low cost and relatively excellent mechanical properties and spinning properties. A fiber product such as a nonwoven fabric is required to have dyeability and dye-affinity. It is known that polypropylene as a raw material for fibers cannot satisfy these properties completely. Therefore, to color polypropylene on an industrial basis, spin dyeing in which an organic or inorganic pigment is added to a raw material in a spinning process is only performed. This method, however, has limitations in color brightness, color variations, printability, and the like. Also, this method has many disadvantages to overcome.

Many methods have been proposed to dye polypropylene.
For example, a method in which polypropylene is modified with a compound having an epoxy group or an amide group as a functional group (see Patent Documents 1 and 2, for example). However, these methods have disadvantages such as complicated reaction processes and need for removal of unreacted products, and therefore, have been still in the basic laboratory research stage without putting to practical use.

Modification of polypropylene has been proposed by blending a resin other than polypropylene has also been proposed, which is considered to be easy to practice (see Patent Documents 3 to 6, for example).

Patent Document 3 proposes polypropylene containing EVA, but this polypropylene is defective in dyeability (corresponding to Comparative Example 2 given later).
Patent Documents 4 to 6 disclose that colorability can be improved by adding a mixture of polyolefin and a polyether ester amide-based compound. Amide compounds contribute to color developability of a dye. A polyether ester amide-based compound, which is one of the above-mentioned amide compounds, exhibits the same properties. Bright color development of a dye is important not only for easy toning but also for design.

However, the polyether site of the above-mentioned polyether ester amide-based resin significantly lowers crystallinity of polypropylene, and, eventually deteriorates preferred properties inherent to polypropylene. For this reason, addition of a large amount of a polyether ester amide-based resin is impossible.
Addition of a polyether ester amide-based resin has a further disadvantage that a dye is likely to be removed from a colored fiber due to lowered crystallinity.
The cost of a polyether ester amide-based compound used as a dyeability-imparting agent is almost 10 times high than the cost of polypropylene. Use of such an expensive substance results in impairing of an economical advantage required for polypropylene fibers.

A polyether ester amide-based compound has elastic melting properties. Therefore, in order to blend a large amount of a polyether ester amide-based compound, it is required to perform spinning after melt kneading a polyether ester amide-based compound with polypropylene in advance for retaining spinning properties. The industrial application value of polypropylene is, therefore, restricted (corresponding to Comparative Example 3, given later).

Patent Document 7 proposes a technique of incorporating a copolyamide and EVA to polypropylene. However, EVA and a copolyamide have viscosity properties which are not compatible with polypropylene having a high melt flow rate (MFR) used in multifilaments, spunbonds, and the like. Therefore, spinning properties may deteriorate, and, bright color developability of the polyether ester amide-based compound cannot be achieved by a copolyamide and EVA (corresponding to Comparative Example 4, given later).

In Patent Document 6, a polyether ester amide compound and several types of light stabilizers are used in combination. This technique readily eliminates the removal of a dye caused by a nature of a polyether ester amide-based compound that it significantly lowers the crystallinity of polypropylene. However, other problems such as costliness are not solved at all.

Patent Document 1: JP-A-7-90783
Patent Document 2: Japanese Patent No.2857115
Patent Document 3: JP-A-2000-8223
Patent Document 4: JP-A-58-120812
Patent Document 5: JP-A-2003-138421
Patent Document 6: JP-A-2004-515658
Patent Document 7: WO97/47684

The invention has been made in view of the above-mentioned problems. An object of the invention is to readily impart polypropylene fibers with excellent dyeability as well as improved washing resistance by a novel polypropylene-based composition.
Another object of the invention is to enhance weatherability of fibers.

### DISCLOSURE OF THE INVENTION

The inventor made extensive studies, and has found that a fiber which has a hitherto unaccomplished level of spinning properties, dyeability, and washing resistance can be obtained by use of a composition formed by melt blending a polyether ester amide-based compound and ethylene vinyl acetate (EVA) having specific properties with a polypropylene-based resin at appropriate amount ratios.

The inventor has also found that a resin composition obtained by further adding suitable amounts of a hindered amine-based light stabilizer and a UV absorber (UVA) to the above-mentioned composition, followed by melt blending, exhibits significantly improved weatherability.

In contrast to conventional resin compositions obtained by melt blending only a polyether ester amide-based compound with a polypropylene-based resin, a resin composition obtained by further blending a suitable amount of ethylene vinyl acetate (EVA) is improved in washing resistance, which tends to be poor by use of a polyether ester amide-based compound, without impairing bright color developability, while maintaining dyeability. The inventor has also found that, by adding a suitable amount of ethylene vinyl acetate, the amount of a polyether ester amide-based compound can be significantly decreased to attain an economical advantage.

The invention has been made based on the above findings. The invention provides the following a polypropylene resin composition and fiber/nonwoven fabric comprising the same.
[1] A polypropylene resin composition obtained by melt blending the following components (A) to (C):
   (A) 85 to 95 mass% of a polypropylene-based resin;
   (B) 3 to 9 mass% of ethylene vinyl acetate (EVA); and
   (C) 2 to 6 mass% of a polyether ester amide-based compound;
      wherein the ethylene vinyl acetate as the component (B) has a vinyl acetate content of 20 mass% or more and 40 mass% or less and a melt flow rate of the ethylene vinyl acetate of 10 g/10 min or more and 40 g/10 min or less.
[2] The polypropylene resin composition according to [1], wherein the polypropylene resin composition further contains the following components (D) and (E) per 100 parts by mass of the polypropylene resin composition according to [1] :
   (D) 0.05 to 0.5 mass% of a hindered amine-based light stabilizer; and
   (E) 0.05 to 0.5 mass% of a UV absorber.
[3] A dyeable polypropylene fiber obtained using the polypropylene resin composition according to [1] or [2].
[4] A nonwoven fabric obtained by using the dyeable polypropylene according to [3].

According to the invention, the composition obtained by melt blending a polyether ester amide-based compound and ethylene vinyl acetate (EVA) having specific properties with a polypropylene-based resin at an appropriate amount ratio can provide a fiber excellent in spinning properties, dyeability, and washing resistance, which cannot be attained by conventional techniques.
According to the invention, the resin composition obtained by further melt blending suitable amounts of a hindered amine-based light stabilizer and a UV absorber can provide a fiber significantly improved in weatherability.

According to the invention, in contrast to conventional resin compositions obtained by melt blending only a polyether ester amide-based compound with a polypropylene-based resin, a resin composition obtained by further blending a suitable amount of ethylene vinyl acetate (EVA) can provide a fiber with improved washing resistance, which tends to be poor by use of a polyether ester amide-based compound, without impairing developability of bright color, while maintaining dyeability. According to the invention, the amount of a polyether ester amide-based compound can be significantly reduced, leading to the production of a dyeable polypropylene fiber/nonwoven fabric with an economical advantage.

### BEST MODE FOR CARRYING OUT THE INVENTION

The invention will be described below in detail.
The polypropylene resin composition of the invention (hereinafter referred to as "the composition of the invention") is obtained by melt blending the following components (A) to (C):
(A) 85 to 95 mass% of a polypropylene-based resin;
(B) 3 to 9 mass% of ethylene vinyl acetate (EVA); and
(C) 2 to 6 mass% of a polyether ester amide-based compound;
   wherein the ethylene vinyl acetate as the component (B) has a vinyl acetate content of 20 mass% or more and 40 mass% or less, and a melt flow rate of 10 g/10 min or more and 40 g/10 min or less.
   It is preferred that the polypropylene resin composition of the invention further contain the following components (D) and (E) per 100 parts by mass of the total amount of the components (A) to (C):
(D) 0.05 to 0.5 parts by mass of a hindered amine-based light stabilizer; and
(E) 0.05 to 0.5 parts by mass of a UV absorber.

Each component will be described below.
(A) Polypropylene-based resin
   The polypropylene-based resin used in the composition of the invention is not particularly restricted. Any known polypropylene may be used.
   Examples of commercial products of such polypropylene include IDEMITSU PP Y-900GV, IDEMITSU PP Y-2005GP, IDEMITSU PP Y-2000GV, IDEMITSU PP Y-3002G, and IDEMITSU PP Y-6005GM (all of the products are manufactured by Idemitsu Kosan Co., Ltd.)
   The polypropylene-based resin to be used in the composition of the invention may be a polypropylene copolymer having α-olefin as a comonomer, insofar as the object of the invention is not impaired. As examples of the commercial product of such a polypropylene copolymer, IDEMITSU PP Y-2043GP and IDEMITSU PP Y-2045GP (all of the products are manufactured by Idemitsu Kosan Co., Ltd.) can be given, for example.
(B) Ethylene vinyl acetate (EVA)
   In the composition of the invention, ethylene vinyl acetate (EVA) is a component which serves to impart the polypropylene-based resin with dyeability, and is required to have the following specific properties.
   The vinyl acetate content of the ethylene vinyl acetate (EVA) used in the composition of the invention is required to be 20 mass% or more and 40 mass% or less, and may preferably be 30 mass% or more and 40 mass% or less. If the vinyl acetate content is less than 20 mass%, the ethylene vinyl acetate may not have functional groups enough to impart the composition with dyeability. If the vinyl acetate content exceeds 40 mass%, spinning properties of polypropylene may be impaired due to difficulty in crystallization.
   The melt flow rate (MFR) of the ethylene vinyl acetate is required to be 10 g/10 min or more and 40 g/10 min or less, and may preferably be 20 g/10 min or more and 40 g/10 min or less. If the melt flow rate is less than 10 g/10 min, spinning properties of polypropylene may deteriorate due to the high melt viscosity. A melt flow rate exceeding 40 g/10 min is not preferable since a fiber may become excessively sticky.
   In the composition of the invention, the ethylene vinyl acetate (EVA) may be used either singly or in combination of two or more. When used in combination of two or more, the combined ethylene vinyl acetates (EVA) are required to satisfy the above-mentioned properties.
(C) Polyether ester amide-based compound
   [0025] The polyether ester amide-based compound used in the composition of the invention is not particularly restricted. Either a synthesized product or a commercial product may be used.
   As the commercial product of the polyether ester amide-based compound used in the composition of the invention, IRGASTAT P16, P18, P20 and P22 (all are products manufactured by Chiba Specialty Chemicals, Inc.), PEBAX MV1074 (manufactured by ELF-ATOCHEM Corp.), Pellestat 1250, 6321, 300 (manufactured by Sanyo Kasei Co., Ltd.) or the like can be given. Polyether ester amide-based compounds may be used singly or in combination of two or more.

### Amount ratios of components (A), (B), and (C)

The composition of the invention is obtained by blending the above-mentioned components (A) to (C) at the following amount ratios.
The component (A) is blended in an amount of 85 to 95 mass%. If the amount of the component (A) is less than 85 mass%, strength and heat resistance inherent to polypropylene may deteriorate. An amount of the component (A) exceeding 95 mass% may result in poor dyeability.

The component (B) is blended in an amount of 3 to 9 mass%, preferably 5 to 7 mass%. If the amount of the component (B) is less than 3 mass%, dyeability may be poor or an economical advantage may be difficult to maintain. If the amount of the component (B) exceeds 9 mass%, sufficient dyeability may be maintained, but color brightness may be impaired.

The component (C) is blended in an amount of 2 to 6 mass%, preferably 3 to 5 mass%. If the amount of the component (C) is less than 2 mass%, dyeability may be insufficient, resulting in development of a color which is not bright. An amount of the component (C) exceeding 6 mass% is not preferable, since it may deteriorate washing resistance and impair an economical advantage, although dyeability or color brightness can be maintained.

By using the ethylene vinyl acetate (EVA) as the component (B) and the polyether ester amide-based compound as the component (C) in the above-mentioned suitable amount ratios, it is possible to impart the composition of the invention with excellent spinning properties, dyeability, and washing resistance.
According to the invention, the component (C), which is expensive, is required to be blended only in such a small amount as 2 to 6 mass%, which leads to a commercial advantage as compared with conventional dyeable polypropylene resin compositions. (D) Hindered amine-based light stabilizer

A light stabilizer may be added to the composition of the invention, if need arises. In particular, weatherability may be significantly improved by using the following UV absorber as the component (E) together with the hindered amine-based light stabilizer.
Although the type of the hindered amine-based light stabilizer (hereinafter, often referred to as "HALS") is not particularly restricted, but a high-molecular hindered amine-based stabilizer is preferable. A high-molecular hindered amine-based stabilizer serves to suppress embrittlement of a fiber by stopping resin deterioration cycle which is caused by light, heat or the like.

As examples of the commercial product of a high-molecular HALS which can be added to the composition of the invention, TINUVIN111 (manufactured by Chiba Specialty Chemicals, Inc., a copolymer of N,N',N'',N'''-tetrakis-(4,6-bis-(butyl-(N-methyl-2,2,6,6-tetramethylpiperidine-4-yl)amino)triazine-2-yl)-4,7-diazadecane-1,10-diamine (45%), dimethyl succinate, and 4-hydroxy-2,2,6,6-tetramethyl-1-piperidine ethanol (55%)), Uvinul5050H (manufactured by BASF, a sterically hindered amine oligomer), CHIMASSORB2020(manufactured by Chiba Specialty Chemicals, Inc., a polycondensed product of dibutylamine-1,3,5-triazine-N,N'-bis(2,2,6,6-tetramethyl-4-piperidyl-1,6-hexamethylenediamine) and N-(2,2,6,6-tetramethyl-4-piperidyl)butylamine), CHIMASSORB944 (manufactured by Chiba Specialty Chemicals, Inc., poly[{6-(1,1,3,3,-tetramethylbutyl)amino-1,3,5-triazine-2,4-diyl}{2,2,6,6-tetramethyl-4-piperidyl)imino]hexamethylene{2,2,6,6,-tetramethyl-4-piperidyl)imino}]), CYASORB UV-3346 (manufactured by Sci-Tech, poly[(6-morpholino-s-triazine-2,4-diyl)[2,2,6,6-tetramethyl-4-piperidyl]imino]-hexamethylene[(2,2,6,6-tetramethyl-4-piperidyl)imino]), CYASORB UV-3346 (manufactured by Sci-Tech, poly[(6-morpholino-s-triazine-2,4-diyl)[2,2,6,6-tetramethyl-4-piperidyl]imino]-hexamethylene[(2,2,6,6-tetramethyl-4-piperidyl)imino]], CYASORB UV-3529 (manufactured by Sch-Tech; a methylated polymer of 1,6-hexanediamine-N,N'-bis(1,2,2,6,6-pentamethyl-4-piperidyl) and morpholine-2,4,6-trichloro-1,3,5-triazine), and Hast avin N30 (manufactured by Clariant K.K; a polymer of 2,2,4,4-tetramethyl-7-oxa-3,20-diaza-20(2,3-epoxy-propyl)dispiro-[5,1,11,2]-heneicosan-21-one) can be given. (E) UV absorber

A UV absorber may be added to the composition, if need arises. Weatherability may be improved remarkably by adding a UV absorber together with the above-mentioned hindered amine-based light stabilizer as the component (D). In the invention, the UV absorber serves to suppress decomposition of a dye by exposure to light (UV rays), thereby preventing color fading.
There are no particular restrictions on the type of the UV absorber. Various commercially available UV absorbers may be used.

As examples of the commercially available UV absorber which can be added to the composition of the invention, TINUVIN234 (manufactured by Chiba Specialty Chemicals, Inc., 2-(2H-benzotriazole-2-yl)-4,6-bis(1-methyl-1-phenylethyl)phenol), Uvinul3030 (manufactured by BASF; 1,3-bis-{[2'-cyano-3',3-diphenylacryloyl)oxy]-2,2-bis-[(2-cyano-3',3-diphenylacryloyl)oxy]-2,2-bis-[(2-cyano-3',3-diphenylacryloyl)oxy]methyl}propane), TINUVIN326 (manufactured by Chiba Specialty Chemicals, Inc., 2-[5-chloro(2H)-benzotriazole-2-yl]-4-methyl-5-(tert-butyl)phenol), TINUVIN329 (manufactured by Chiba Specialty Chemicals, Inc., 2-(2H)-benzotriazole-2-yl)-4-(1,1,3,3-tetramethylbutylphenol), TINUVIN1577(manufactured by Chiba Specialty Chemicals, Inc., 2-(4,6-diphenyl-1,3,5-triazine-2-yl)-5-[(hexyl)oxy]-phenol), CYASORB UV-531(manufactured by Sci-tech; 2-hydroxy-4-n-octoxybenzophenone) can be given.

### Amount ratios of the components (D) and (E)

The components (D) and (E) are added per 100 parts by mass of the total of the components (A) to (C).
The component (D) is added in an amount of 0.05 to 0.5 parts by mass, preferably 0.1 to 0.3 parts by mass. If the amount of the component (D) is less than 0.05 parts by mass, an effect of suppressing embrittlement of a fiber by exposure to weather may not be developed sufficiently. An amount of the component (D) exceeding 0.5 parts by mass may result in an economical disadvantage though the effect of suppressing fiber embrittlement is developed.

The component (E) is added in an amount of 0.05 to 0.5 parts by mass, preferably 0.1 to 0.3 parts by mass. If the amount of the component (E) is less than 0.05 parts by mass, an effect of suppressing color fading of a dye by exposure of a fiber to weather may not be developed sufficiently. An amount of the component (E) exceeding 0.5 parts by mass may result in an economical disadvantage though the effect of suppressing color fading of a dye is developed.
(F) Other additives
   The composition of the invention may include known additives which are generally added to a polypropylene-based resin, such as antioxidants, aliphatic metallic salts such as calcium stearate, hydrotalsites, and inorganic fillers.

The composition of the invention may be prepared by melt kneading the above components (A), (B), and (C), as well as the components (D) and (E) if necessary, in the amount range as mentioned above.

The dyeable polypropylene fiber and the nonwoven fabric (hereinafter referred to as "the fiber of the invention" and the "the nonwoven fabric of the invention") will be described below.
The fiber of the invention can be obtained by rendering the polypropylene resin composition of the invention to be fibrous by the known melt spinning method. The melt spinning method is not restricted to spinning using a winder. Spinning using air such as spun bonding and melt blow bonding may be used.

The nonwoven fabric of the invention can be produced by using the above-mentioned fiber of the invention. The term "nonwoven fabric" literally means "fabric which is not woven". The nonwoven fabric is not knit nor paper/film, but a sheet obtained by bonding fibers together. There are no particular restrictions on the method for bonding fibers. Known appropriate methods may be selected according to the purpose and use.

The fiber of the invention is not restricted to the polypropylene fiber described in detail in the examples of the specification. Fibers obtained by melting a resin formed of a combination of various components in the invention, and extruding the resin through a fine pore to form a fiber, or composite fibers in which the resin is exposed entirely or partially to the surface, such as fibers having a core-sheath structure, a side-by-side structure, or the like can also be given.

### EXAMPLES

The invention will be described in more detail according to the following examples.

### Example 1

To a brand polypropylene for fibers with an MFR of 18 g/10 min (IDEMITSU PP Y-2000GV, manufactured by IDEMITSU KOSAN, Co., Ltd.), ethylene vinyl acetate (EVA) with an MFR of 18 g/10 min and a vinyl acetate content of 28 mass% (Ultrathen 710, manufactured by TOSOH Corporation), and a polyether ester amide-based compound (IRGAST AT P16, manufactured by Chiba Specialty Chemicals, Inc.) as a dyeability-imparting agent were melt blended at amount ratios of 90:6:4, followed by sufficient stirring. The resultant molten resin mixture was extruded from a nozzle with a pore diameter of 0.5 mm of a 40 mm direct monoaxial extruder (manufactured by Tanabe Plastics Machinary, Co., Ltd.) at a spinning temperature of 220°C and a discharge rate of 0.3 g/min · pore. 12 dtex of fibers were produced at a spinning speed of 250 m/min.

The melt flow rate was measured according to JIS K7210. The melt flow rate of polypropylene was measured at 230°C under a load of 21.18N, and the melt flow rate of ethylene vinyl acetate was measured at 190°C and under a load of 21.18N. The vinyl acetate content was measured according to JIS K6730.

For the obtained fiber, spinning properties, dyeability, and washing resistance were evaluated. The results obtained are shown in Table 1.

### <Method and criteria of evaluating fiber>

(1) Spinning properties
   12 dtex of fibers were produced using the polypropylene resin composition obtained in Example 1, and evaluated for spinning properties.
(2) Dyeability

To a dye bath prepared by using a polyester dispersing dye (SumikaronRedS-RPD(N) manufactured by Sumika Chemtex Co., Ltd.), 3% owf (mass per fiber) or a 0.1% (amount per dye bath) of a surfactant ("Family Fresh" manufactured by Kao Corporation) was added. In the resultant dye bath with a bath ratio of 1:90, 2 g of the fiber sample was immersed, and the container was covered tightly. The temperature of the container was raised to 130°C at a temperature elevation rate of 5°C/min, and kept at 130°C for one hour. At that time, the internal pressure inside the container was about 2 kg/cm². After subjecting the container to maximum cooling, the fibers were taken out of the container. The dyed fibers were rinsed sufficiently, followed by drying at room temperature, whereby dyed fibers were obtained.

Dyeability was evaluated as follows. A dyeing solution before dyeing and a dyeing solution after dyeing were diluted 1:1 with a 1:1 mixed solvent of acetone and ethanol (providing that the concentration of a dyeing solution before dyeing is 100%, and a dyeing solution obtained by diluting the above solution with a 1:1 mixed solvent of acetone and ethanol was used as a dye concentration sample) were compared with a dye concentration sample. The degree of transfer (%) of the dye to the fiber was evaluated, and the brightness of the color of the dyed fibers was evaluated according to the following criteria.
Good: Bright
Poor: Light, dull
Bad: Not significantly different from fibers obtained from known propylene
The higher degree of dye transfer means excellent dyeability. The dyed fibers having a low degree of dye transfer or the color of the dye was not bright was judged to be not worth evaluation, and hence, the subsequent evaluation was omitted.
(3) Washing resistance
   For the fibers with sufficient dyeability, 0.5 g of the dyed fibers was collected in a sampling bottle. 20 ml of acetone was added to allow the fibers to be immersed in acetone at room temperature for 30 minutes. Providing that a 3% solution obtained by dissolving a polyester dispersing dye (SumikaronRedS-RPD(N) manufactured by Sumika Chemtex Co., Ltd.) in a 1:3 mixed solvent of distilled water and acetone is 100, and a solution obtained by diluting the above solution with acetone was used as a dye concentration sample. The degree of extraction (%) of the dye from the fibers was evaluated according to the following criteria. A lower degree of dye extraction means excellent washing resistance.
   A degree of extraction of 30(%) or less is evaluated as being resistant to washing (in Table 1, expressed as "good").
   The results of each evaluation are shown in Table 1 given below.

### Example 2

A polypropylene resin composition was prepared in the same manner as in Example 1, except that ethylene vinyl acetate with an MFR of 30 g/10 min and a vinyl acetate content of 32 mass% (Ultrathen 750, manufactured by TOSOH Corporation) was used as the dyeability-imparting agent. Spinning was performed in the same manner as in Example 1 to obtain fibers. The resultant fibers were evaluated in the same manner as in Example 1. The results are shown in Table 1 given below.

### Example 3

A polypropylene resin composition was prepared in the same manner as in Example 1, except that a polyether ester amide-based compound (IRGASTAT P18, manufactured by Chiba Specialty Chemicals, Inc.) was used as the dyeability-imparting agent. Spinning was performed in the same manner as in Example 1 to obtain fibers. The resultant fibers were evaluated in the same manner as in Example 1. The results are shown in Table 1 given below.

### Example 4

A polypropylene resin composition was prepared in the same manner as in Example 1, except that ethylene vinyl acetate with an MFR of 30 g/10 min and a vinyl acetate content of 32 mass% (Ultrathen 750, manufactured by TOSOH Corporation) and a polyether ester amide-based compound (IRGASTAT P18, manufactured by Chiba Specialty Chemicals, Inc.) were used as the dyeability-imparting agent. Spinning was performed in the same manner as in Example 1 to obtain fibers. The resultant fibers were evaluated in the same manner as in Example 1. The results are shown in Table 1 given below.

### Comparative Example 1

A polypropylene resin composition was prepared in the same manner as in Example 1, except that the dyeability-imparting agent was not added. Spinning was performed in the same manner as in Example 1 to obtain fibers. The resultant fibers were evaluated in the same manner as in Example 1. The results are shown in Table 1 given below.

### Comparative Example 2-1

A polypropylene resin composition was prepared in the same manner as in Example 1, except that only ethylene vinyl acetate (EVA) (Ultrathen 710, manufactured by TOSOH Corporation) was blended as the dyeability-imparting agent at a ratio of 90:10. Spinning was performed in the same manner as in Example 1 to obtain fibers. The resultant fibers were evaluated in the same manner as in Example 1. The results are shown in Table 1 given below.

### Comparative Example 2-2

A polypropylene resin composition was prepared in the same manner as in Comparative Example 2-1, except that ethylene vinyl acetate (EVA) (Ultrathen 750, manufactured by TOSOH Corporation) was used as the dyeability-imparting agent. Spinning was performed in the same manner as in Example 1 to obtain fibers. The resultant fibers were evaluated in the same manner as in Example 1. The results are shown in Table 1 given below.

### Comparative Example 2-3

A polypropylene resin composition was prepared in the same manner as in Comparative Example 2-1, except that ethylene vinyl acetate (EVA) with an MFR of 4 g/10 min and a vinyl acetate content of 26% (Ultrathen 634, manufactured by TOSOH Corporation) was used as the dyeability-imparting agent. Spinning was performed in the same manner as in Example 1, but the subsequent evaluation was not performed due to serious fiber breakage.

### Comparative Example 3-1

A polypropylene resin composition was prepared in the same manner as in Example 1, except that only a polyether ester amide-based compound (IRGASTAT P16, manufactured by Chiba Specialty Chemicals, Inc.) was used as the dyeability-imparting agent at a ratio of 90:10. Spinning was performed in the same manner as in Example 1 to obtain fibers. The resultant fibers were evaluated in the same manner as in Example 1. The results are shown in Table 1 given below.

### Comparative Example 3-2

A polypropylene resin composition was prepared in the same manner as in Example 1, except that a polyether ester amide-based compound (IRGASTAT P18, manufactured by Chiba Specialty Chemicals, Inc.) was used as the dyeability-imparting agent. Spinning was performed in the same manner as in Example 1, but the subsequent evaluation was not performed due to serious fiber breakage.

### Comparative Example 3-3

A polypropylene resin composition was prepared in the same manner as in Comparative Example 3-1, except that a polyether ester amide-based compound (IRGASTAT P20, manufactured by Chiba Specialty Chemicals, Inc.) was used as the dyeability-imparting agent. Spinning was performed in the same manner as in Example 1 to obtain fibers. The resultant fibers were evaluated in the same manner as in Example 1. The results are shown in Table 1 given below.

### Comparative Example 4-1

A polypropylene resin composition was prepared in the same manner as in Example 1, except that ethylene vinyl acetate (EVA) with an MFR of 4 g/10 min and a vinyl acetate content of 26 mass% (Ultrathen 634, manufactured by TOSOH Corporation), and a copolyamide (nylon 6/66 copolymer, 5013B manufactured by Ube Industries, Ltd. and nylon 6/12 copolymer, 7115U manufactured by Ube Industries, Ltd. at a ratio of 1:1) were blended as the dyeability-imparting agents at amount ratios of 90:6:4. Spinning was performed in the same manner as in Example 1 to obtain fibers, but the subsequent evaluation was not performed due to serious fiber breakage.

### Comparative Example 4-2

A polypropylene resin composition was prepared in the same manner as in Example 1, except that ethylene vinyl acetate (EVA) with an MFR of 4 g/10 min and a vinyl acetate content of 26 mass% (Ultrathen 634, manufactured by TOSOH Corporation), a copolyamide (nylon 6/66 copolymer, 5013B manufactured by Ube Industries, Ltd. and nylon 6/12 copolymer, 7115U manufactured by Ube Industries, Ltd. at a ratio of 1:1) were blended as the dyeability-imparting agents at amount ratios of 90:6:4. The resin composition was melt-kneaded at 180°C using a twin-screw kneader (TEM-35B, manufactured by Toshiba Machine Machinery Co., Ltd.). The resultant strand was cooled, and pelletized. The pellets were evaluated in the same manner as in Example 1. The results are shown in Table 1 given below.

**Table 1**

| | Blending ratio (mass %) | | | | | Spinning properties, | Degree of dye transfer (%) | Appearance | Resistance to washing (%) | (Degree of extraction) |
|---|---|---|---|---|---|---|---|---|---|---|
| | Polypropylene | Ethylene vinyl acetate (EVA) | | | Polyether ester amide-based compound | | | | | |
| | | Melt flow rate | | <Vinyl acetate content> | {Type}^{*)} | | | | | |
| Example 1 | 90 | (18 g/10 min) | 6 | <28%> | 4 {A} | No problem | 94 | Good | 25 | Good |
| Example 2 | 90 | (30 g/10 min) | 6 | <32%> | 4 {A} | No problem | 94 | Good | 27 | Good |
| Example 3 | 90 | (18 g/10 min) | 6 | <28%> | 4 {B} | No problem | 94 | Good | 23 | Good |
| Example 4 | 90 | (30 g/10 min) | 6 | <32%> | 4 {B} | No problem | 94 | Good | 29 | Good |
| Comparative Example 1 | 100 | | - | | - | No problem No | 40 | Bad Not dyed | | |
| Comparative Example 2-1 | 90 | (18 g/10 min) | 10 | <28%> | - | No problem | 88 | Poor Color was not bright | | |
| Comparative Example 2-2 | 90 | (30 g/10 min) | 10 | <32%> | - | No problem | 94 | Poor Color was not bright | | |
| Comparative Example 2-3 | 90 | (4 g/10 min) | 10 | <26%> | - | Fiber breakage | | | | |
| Comparative Example 3-1 | 90 | | - | | 10 {A} | Slight foaming | 93 | Good | 45 | Bad |
| Comparative Example 3-2 | 90 | | - | | 10 {B} | Fiber breakage | | | | |
| Comparative Example 3-3 | 90 | | - | | 10 {C} | No problem | 85 | Good~Poor | 70 | Bad |
| Comparative Example 4-1 | 90 | (4 g/10 min) | 6 | <26%> | 4 {D} | Fiber breakage | | | | |
| Comparative Example 4-2 | 90 | (4 g/10 min) | 6 | <26%> | 4 {D melt-blended} | No problem | 83 | Poor Color was not bright | | |

*) In Table 1, the type of the polyether ester amide compound is as follows.
   A: IRGSTAT P16
   B: IRGASTAT P18
   C: IRGASTAT P20
   D: Nylon copolymer

From the results shown in Table 1, it is understood that the resin compositions prepared in Examples 1 to 4 had satisfactory spinning properties, a high degree of dye transfer, excellent appearance, and improved washing resistance.
It is understood that, although a polyethylene resin exhibited satisfactory spinning properties, but was not dyed (see Comparative Example 1). In addition, the color of dyed fibers was not bright enough when a polyether ester amide-based compound was not added (see Comparative Examples 2-1 and 2-2). It is also understood that fiber breakage occurred when the melt flow rate (MFR) was less than 10 g/min (see Comparative Examples 2-3 and 4-1). In addition, foaming or fiber breakage, or lowering in washing resistance occurred when ethylene vinyl acetate (EVA) was not added (see Comparative Examples 3-1 to 3-3).

### Example 5-1

A polypropylene resin composition was prepared in the same manner as in Example 2, except that 0.1 mass% of TINUVIN111 (manufactured by Chiba Specialty Chemicals, Inc.) as the high-molecular HALS and 0.2 mass% of TINUVIN 234 (manufactured by Chiba Specialty Chemicals, Inc.) as the UV absorber were added. Spinning was performed in the same manner as in Example 2 to obtain fibers. The resultant fibers were dyed in the same manner as in Example 1. The dyed fibers were evaluated for weatherability according to the following evaluation method. The results are shown in Table 2 given below.
(4) Weatherability

According to JIS L0843:1998 A method A-1, the dyed fibers obtained above were exposed to at 63°C a light having a wavelength of 300 to 400 nm from a Xenon weather weatherometer at an irradiation illuminance of 45 W/m². The time till the color fading and embrittlement of the dyed fibers occurred (retention time) was measured.

### Example 5-2

A polypropylene resin composition was prepared in the same manner as in Example 5-1, except that 0.1 parts by mass of Uvin15050H (manufactured by BASF) was used as the high-molecular HALS. Spinning was performed in the same manner as in Example 5-1 to obtain fibers. The resultant fibers were dyed in the same manner as in Example 1. The dyed fibers were evaluated for weatherability according to the following evaluation method. The results are shown in Table 2 given below.

### Example 5-3

A polypropylene resin composition was prepared in the same manner as in Example 5-1, except that Uvin13030 (manufactured by BASF) was used as the UV absorber. Spinning was performed in the same manner as in Example 5-1 to obtain fibers. The resultant fibers were dyed in the same manner as in Example 1. The dyed fibers were evaluated for weatherability according to the same evaluation method as in Example 1. The results are shown in Table 2 given below.

### Example 5-4

A polypropylene resin composition was prepared in the same manner as in Example 5-1, except that 0.1 mass% of TINUVIN111 (manufactured by Chiba Specialty Chemicals, Inc.) was added and the UV absorber (UVA) was not added. Spinning was performed in the same manner as in Example 5-1 to obtain fibers. The resultant fibers were dyed in the same manner as in Example 1. The dyed fibers were evaluated for weatherability according to the following evaluation method. The results are shown in Table 2 given below.

### Example 5-5

A polypropylene resin composition was prepared in the same manner as in Example 5-2, except that 0.1 mass% of Uvinl5050H (manufactured by BASF) was added and the UV absorber (UVA) was not added. Spinning was performed in the same manner as in Example 5-1 to obtain fibers. The resultant fibers were dyed in the same manner as in Example 1. The dyed fibers were evaluated for weatherability according to the following evaluation method. The results are shown in Table 2 given below.

### Example 5-6

A polypropylene resin composition was prepared in the same manner as in Example 5-2, except that 0.2 mass% of TINUVIN234 (manufactured by Chiba Specialty Chemicals, Inc.) was added as the UV absorber (UVA) and a high-molecular HALS was not added. Spinning was performed in the same manner as in Example 5-2 to obtain fibers. The resultant fibers were dyed in the same manner as in Example 1. The dyed fibers were evaluated for weatherability according to the following evaluation method. The results are shown in Table 2 given below.

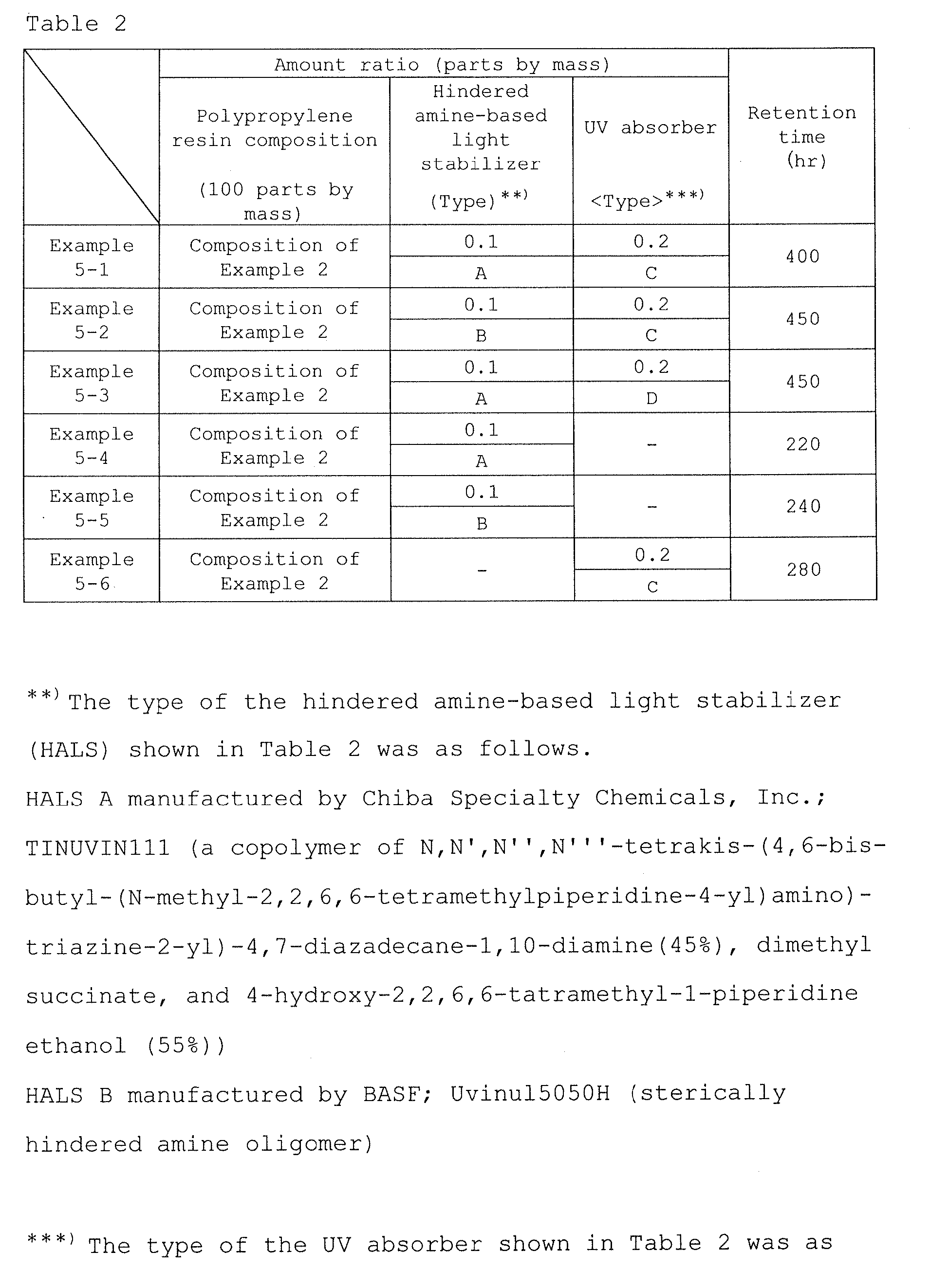

)

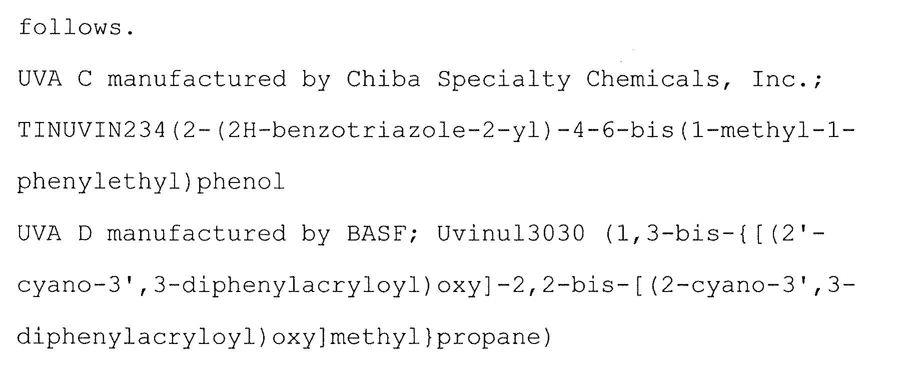

From the results shown in Table 2, it is understood that the resin compositions of Examples 5-1 to 5-3 provided fibers with a long retention time of 400 hours or longer, which means significantly excellent weatherability.

### INDUSTRIAL APPLICABILITY

According to the invention, fibers excellent in spinning properties, dyeability, and washing resistance can be provided which cannot be attained by conventional techniques.
According to the invention, the resin composition with which suitable amounts of a hindered amine-based light stabilizer and a UV absorber are melt-blended can provide fibers significantly improved in weatherability.

According to the invention, in contrast to the conventional resin composition obtained by melt blending only a polyether ester amide-based compound with a polypropylene-based resin, a resin composition obtained by also blending a suitable amount of ethylene vinyl acetate (EVA) can provide a fiber with improved washing resistance, which tends to be poor by use of a polyether ester amide-based compound, without impairing developability of bright color, while maintaining dyeability. According to the invention, the amount of a polyether ester amide-based compound can be significantly reduced, leading to the production of a dyeable polypropylene fiber/nonwoven fabric with an economical advantage.

## Claims

1. A polypropylene resin composition obtained by melt blending the following components (A) to (C):
(A) 85 to 95 mass% of a polypropylene-based resin;
(B) 3 to 9 mass% of ethylene vinyl acetate (EVA); and
(C) 2 to 6 mass% of a polyether ester amide-based compound;
wherein the vinyl acetate content of the ethylene vinyl acetate as the component (B) is 20 mass% or more and 40 mass% or less, and the melt flow rate of the ethylene vinyl acetate is 10 g/10 min or more and 40 g/10 min or less.

2. The polypropylene resin composition according to claim 1, wherein the polypropylene resin composition further contains the following components (D) and (E) per 100 parts by mass of the polypropylene resin composition according to claim 1:
(D) 0.05 to 0.5 mass% of a hindered amine-based light stabilizer; and
(E) 0.05 to 0.5 mass% of a UV absorber.

3. A dyeable polypropylene fiber obtained using the polypropylene resin composition according to claim 1 or 2.

4. A nonwoven fabric obtained by using the dyeable polypropylene according to claim 3.
